# EUROPÄISCHE PATENTSCHRIFT

(11) **EP 0 618 119 B1**
(45) Veröffentlichungstag und Bekanntmachung des Hinweises auf die Patenterteilung: **28.08.1996**
(21) Anmeldenummer: 94250056.2
(22) Anmeldetag: 04.03.1994
(51) Int. Cl.: B60T 13/66, B60T 17/22

(54) **Einrichtung zur Einstellung der Bremskraft in Bremsscheiben für Schienenfahrzeuge**
Brake force control device for brakes discs of railway vehicles
Dispositif de réglage de force de freinage pour disques de frein de véhicules ferroviaires

(30) Priorität: 31.03.1993 DE 4311017
(43) Veröffentlichungstag der Anmeldung: 05.10.1994
(73) Patentinhaber: MANNESMANN Aktiengesellschaft, D-40213 Düsseldorf (DE)
(72) Erfinder: Keschwari-Rasti, Mahmud, D-30890 Barsinghausen (DE)
(74) Vertreter: Presting, Hans-Joachim, Dipl.-Ing.

(56) Entgegenhaltungen:
- EP-A- 0 189 076
- GB-A- 2 199 383
- US-A- 5 172 316

## Beschreibung

Es wird von einer Einrichtung zur Einstellung der Bremskraft an Schienenfahrzeugen ausgegangen, bei der eine jedem Schienenfahrzeug zugeordnete Hauptbehälter-Luftleitung über ein steuer- und/oder regelbares Ventilsystem an einen Bremszylinder geführt ist, der mit Gestängesteller versehen ist und dessen an eine Kolbenstange angeschlossenes Bremsgestänge mittels zwei gegenläufiger Bremsbacken mit einer auf der Achse der Radpaare befestigten Bremsscheibe zusammenwirkt, wobei Sollwert-Signale über einen Fahrzeug-BUS und/oder eine Pulsbreitensteuerung an eine Bremssteuerung zur Verarbeitung leitbar sind und die Bremssteuerungs-Signale mittels Leitungen auf das Ventilsystem schaltbar sind, wobei in dem Bremsgestänge ein Bremsmomentaufnehmer für die Messung von Dehnungs-, Zug- oder Biegekräften und zur Umwandlung in ein elektrisches Meßsignal angeordnet ist, die Meßsignale an die Bremssteuerung weiterleitbar und mit über den Fahrzeug-BUS erhaltenen Sollwert-Signalen eines Sollwert-Potentiometers vergleichbar sind und das Differenzwert-Sollsignal über das Ventilsystem an den Bremszylinder weiterleitbar ist zur Änderung des Bremsmomentes an dem Bremsbackenpaar.

Mit dieser Einrichtung kann nicht nur ein genaueres Meßergebnis für die Bremskraft erzielt werden, sondern es kann gleichzeitig auch eine Korrektur einer vom Sollwert abweichenden Bremskraftgröße vorgenommen werden.

Eine solche Einrichtung geht auf einen älteren, nicht veröffentlichten Vorschlag zurück und ist an und für sich für Schienenfahrzeuge mit einem Fahrzeug-BUS vorgesehen. In älteren Fahrzeugtypen, die einen Fahrzeug-BUS nicht haben, ist jedoch die Anwendung einer solchen vollständigen Einrichtung nicht möglich. Um sie auch für Züge einsetzen zu können, die einen sogen. Mischverkehr bilden, d.h. aus Schienenfahrezugen neuerer und älterer Bauart bestehen, ist es notwendig, das Bremssignal anderweitig auf die Bremssteuerung zu übertragen, und der Erfindung liegt daher die Aufgabe zugrunde, hierfür eine geeignete Lösung zu finden.

Aus der EP 0 373315 A1 ist ein Verfahren und eine Anordnung eines elektrisch gesteuerten Bremskreises einer Mehrkreis-Bremsanlage für Anhänger mit druckmittelbetätigten Bremsen bekannt. Jeder Bremskreis ist sowohl elektrisch als auch durch den vom Bremswertgeber ausgesteuerten Druck steuerbar.

Die Bremsdruck-Steuereinrichtung ist mit einem Drucksensor verbunden. Der Drucksensor kann in mehreren Ausbildungen gestaltet sein. So ist es möglich einen ausgesteuerten Druck in ein von seiner Höhe abhängiges elektrisches Signal umzusetzen. Im bekannten Fall ist der Drucksensor an eine Steuerelektronik angeschlossen, die ein korrigiertes Signal an Druckmodulatoren weiterleitet, wobei eine Abschaltung stattfindet, wenn sich Gleichheit zwischen den Signalen der Drucksensoren und den korrigierten Signalen ergibt. Ein derartiges Verfahren und die entsprechende Einrichtung ist für Schienenfahrzeuge weder anwendbar noch brauchbar, weil in einem Druckluftsystem entsprechende Ventilsysteme und entsprechende redundante Systeme verlangt werden.

Es ist ferner bekannt (GB 2 199 383 A), bei einer Notbrems-Steuereinrichtung neben einer Hauptbehälterluftleitung eine Signalleitung mitzuführen, wobei die Signalleitung an einen Signalgenerator und an eine dynamsiche Bremssteuerung angeschlossen ist. Damit läßt sich jedoch nur ein Notrelais-Ventil steuern. Die weitergehenden Eigenschaften der bekannten Einrichtung, z.B. Fälle, in denen das Notrelais-Ventil leckt, liegen außerhalb des vorliegenden Problems. So wird dort noch vorgeschlagen. unter Umgehung des Arbeitsbremsdruckes mittels einer By-pass-Leitung den vollen Arbeitsbremsdruck anstelle des Notbremsdruckes zusätzlich zu erzeugen. Ein solches System unterscheidet sich grundlegend von dem erwähnten Rückkopplungssystem, zunächst die Bremskraft von der Bremsscheibe zu ermitteln, um diese dann über geeignete Datenkanäle zu kodieren, zu korrigieren und letztendlich das Ergebnis an die Bremsscheibe zurückzugeben.

Die gestellte Aufgabe wird dadurch gelöst, daß anstelle der Bremssignalübertragung über den Fahrzeug-BUS das über eine Hauptluft-leitung pneumatisch schaltbare Bremssignal mittels eines an die Hauptluft-Leitung angeschlossenen PU-Wandlers auf die Bremssteuerung übertragbar ist. Der Vorteil liegt darin, daß man die Erfindung nicht nur auf Schienenfahrzeuge neueren Herstelldatums, sonder auch auf ältere Schienenfahrzeuge anwenden kann, so daß auch die älteren Schienenfahrzeuge mit diesem System ausgerüstet werden können.

In Ausgestaltung der Erfindung ist vorgesenen, daß in jedem einzelnen Fahrzeug ein mittels einer Druckluftleitung angeschlossener PU-Wandler bzw. mittels elektrischer Leitungen an die Bremssteuerung angeschlossen ist.

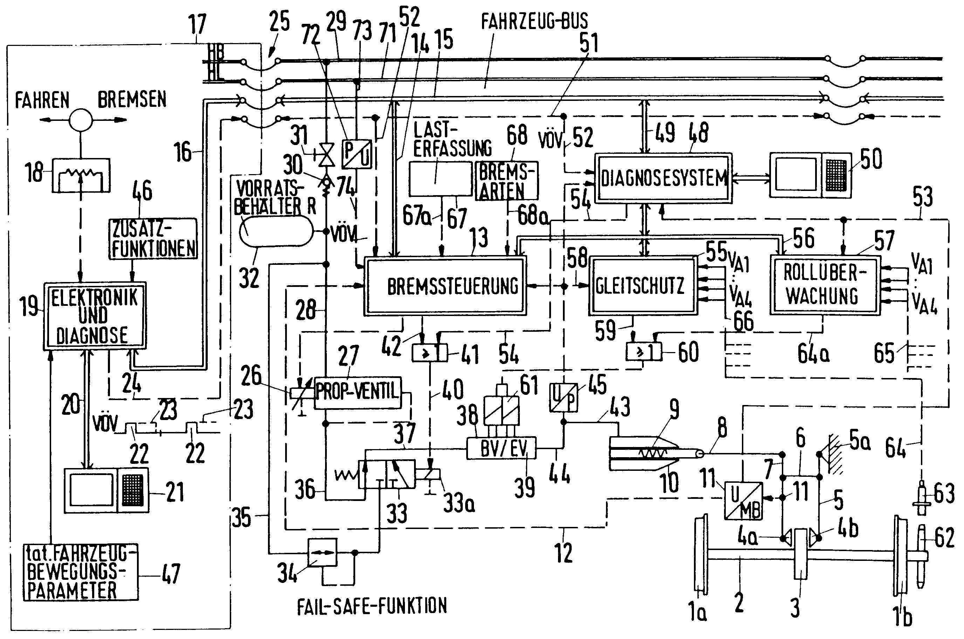

Ein Ausführungsbeispiel der Erfindung ist in der Zeichnung dargestellt und wird im folgenden naher beschrieben.

Die einzige Figur der Zeichnung zeigt ein Funktions- und Blockschaltbild der Gesamteinrichtung.

Ein auf Schienen laufendes Räderpaar 1a, 1b ist auf der Achse 2 gelagert, die auch eine Bremsscheibe 3 trägt. An den Seitenflächen der Bremsscheibe 3 greift symmetrisch ein Bremsbackenpaar 4a, 4b an, das mittels eines Bremsgestänges 5 mit einer Querstange 6 und einem zweiarmigen Hebel 7 an die Kolbenstange 8 angelenkt ist. Die Kolbenstange 8 nimmt auch einen Gestängesteller 9 auf, der das Bremsspiel ausschaltet. Die Kolbenstange 8 bzw. der Gestängesteller 9 sind in dem Bremszylinder 10 geführt. Innerhalb des Bremsgestänges 5 ist ein Bremsmomentaufnehmer 11 eingeschaltet, der z.B. eine Kraft (Dehnungskraft, Zugkraft, Biegekraft, Druckkraft u.dgl.) in ein elektrisches Signal umformt. Der Bremsmomentaufnehmer 11, der z.B. aus einem Dehnungsmeßstreifen besteht, ist über eine verbindung 12 an eine Bremssteuerung 13 angeschlossen.

Die Bremssteuerung 13 Kommuniziert über einen verbindungs-Bus 14 mit einem Fahrzeug-Bus 15, der an den Datenbus 16 eines Führerstandes 17, z.B. einer Lokomotive, ankoppelbar ist.

Der Führerstand 17 weist neben einem Sollwert-Potentiometer 18 ein mit dem Datenbus 16 verbundenes Elektronik-Diagnose-Gerät 19, einen über einen weiteren Datenbus 20 angeschlossenen Monitor 21 auf. Die Sollwert-Signale des Sollwert- Potentiometers 18 gelangen von dem Elektronik-Diagnose-Gerät 19 über eine zweite redundante Verbindung 24 (jeweils gestrichelte Linie) als Pulsbreitensteuerung 22, Pulsbreitenänderung 23 über eine Kopplung 25 in die Bremssteuerung 13 und von dieser zu einem Elektromagneten 26 eines Proportional-Ventils 27. Dieses ist durch eine Leitung 28 an eine Hauptbehälterluftleitung 29 unter Zwischenschaltung eines Rückschlagventils 30, eines Absperrventils 31 und eines Vorratsbehälters 32 angeschlossen.

Ein Wegeventil 33 ist an die Leitung 28 unter Zwischenschaltung eines Notdruckventils 34 über eine Leitung 35 angeschlossen. Von dem Wegeventil 33 sind eine Leitung 36 an das Proportional-Ventil 27 und eine Leitung 37 an ein Belüftungsventil 38 und ein Entlüftungsventil 39 geführt. Der Elektromagnet 33a des Wegeventils 33 ist ferner durch eine dritte Verbindung 40 an ein Logikelement 41 signalmäßig angeschlossen, das ebenfalls signalmäßig durch eine vierte Verbindung 42 mit der Bremssteuerung 33 zusammenwirkt.

Der Bremszylinder 10 steht sodann durch eine Leitung 43 und durch eine Leitung 44 mit einem Druckumsetzer 45 in Verbindung. Die bis hier beschriebene Einrichtung bewirkt, daß der in dem Bremsgestänge 5 (bzw. in dem zweiarmigen Hebel 7) eingeschaltete Bremsmomentaufnehmer 11 die tatsächliche Bremskraft mißt, daß die gemessene Bremskraft mit dem Bremskraft-Sollwert des Sollwert-Potentiometers 18 in der Bremssteuerung 13 verglichen wird und daß analog zu dem ermittelten Differenzwert der Druck in dem Bremszylinder 10 verändert, d.h. erhöht oder reduziert wird. Bei überschüssiger Bremskraft wird der Bremszylinderdruck soweit reduziert, daß der angepaßte Bremszylinderdruck dem jeweils aktuellen Haftreibungsbeiwert zwischen Rad 1a,1b und der Schiene entspricht.

Im Führernaus 17 sind weiterhin an das Elektronik-/Diagnose-Gerät Zusatzfunktionen 46, wie z.B. für Notbremsungen, Zielbremsungen, automatische Fahr- und Bremssteuerung, Linienzug-Beeinflussung, Zugartwechsel, lastabhängige Bremsung, Schnellbremsung, Magnetschienenbremse, Bremsbeschleunigung, Lösebeschleunigung u.dgl. vorgesehen. Außerdem können über ein Gerät 47 die tatsächlichen Bewegungsparameter in das Elektronik-/Diagnose-Gerat 19 eingespeist und dort verarbeitet werden.

An den Fahrzeugbus 15 ist ein Diagnose-System 48 für einen weiteren Verbindungs-Bus 49 an den Datenfluß angeschlossen, ebenso ein zweiter Monitor 50. Das Diagnosesystem 48 ist ferner an den Fahrzeug-Bus 15 angeschlossen, die an die zweite verbindung 24 ankoppelbar ist. Von der Fahrzeug-Verbindung 51 verläuft außerdem eine Signalleitung 52 für die Pulsbreitensteuerung 22 (VÖV-Signale betreffend eine Bremswertvorgabe). Das Diagnose-System 48 überprüft die gesamte Peripherie und leitet die Signalwerte über den Fahrzeug-Bus 15 in den Führerstand 17. Eine Signalleitung 52 ist von der Fahrzeug-Verbindung 51 auch zur Bremssteuerung 13 geführt.

Das Diagnose-System 48 erhält auch Signale über eine fünfte Verbindung 53 vom Bremsmomentaufnehmer 11 und gibt Signale über ein sechste Verbindung 54 an das Logik-Element 41 weiter.
Als weiteres System ist ein Gleitschutzgerät 55 über einen Minidaten-Bus 56 sowohl mit der Bremssteuerung 13 als auch mit dem Diagnose-System 48 als auch mit einer Roll-überwachung 57 verbunden. Das Gleitschutzgerät 55 ist außerdem direkt mit der Bremssteuerung 13 mittels einer Leitung 58 und mit dem Diagnose-System 48 verbunden. Außerdem führt eine Leitung 59 zu einem weiteren Logik-Element 60, das den Elektromagneten 61 der Belüftungs- und Entlüftungsventile 38 und 39 steuert.

Eine weitere Logik-Element-Leitung 64a ist von der Roll-überwachung 57 an das Logik-Element 60 geführt.

Tatsächliche Fahrdaten werden von einem auf der Achse 2 sitzenden umlaufenden Polrad 62 und einem Impulsgeber 63 durch eine Signalleitung 64 über Abzweigleitungn 65 und 66 in das Gleitschutzgerät 55 und gleichzeitig in die Roll-Überwachung 57 geleitet.

Außerdem ist von der Lasterfassung 67 über eine Leitung 67a eine unmittelbare Verbindung zur Bremssteuerung 13 geschaffen. Ebenso besteht eine solche unmittelbare Verbindung von der Bremsarten-Erfassung 68 über eine oder mehrere Leitungen 68a.

Das Diagnose-System 48 wird ferner über eine Steuerleitung 69 mit den Signalen des Druck-Umsetzers 45 versorgt, wobei diese Signale über die Leitung 58 ebenfalls in das Gleitschutzgerät 55 geführt sind.

Die weitere Ausgestaltung des älteren Schienenfahrzeuges besteht darin, daß das über eine Hauptluft-Leitung 71 pneumtisch schaltbare Bremssignal mittels eines an die Hauptluft-Leitung 71 angeschlossenen PU-Wandlers 72 auf die Bremssteuerung 13 übertragbar ist. In jedem einzelnen Schienenfahrzeug ist ein mittels einer Druckluftleitung 73 angeschlossener PU-Wandler 72 mittels elektrischer Leitungen 74 an die Bremssteuerung 13 angeschlossen.

### Bezugszeichenliste

- 1a: Radpaar
- 1b: Radpaar
- 2: Achse
- 3: Bremsscheibe
- 4a: Bremsbackenpaar
- 4b: Bremsbackenpaar
- 5: Bremsgestande
- 5a: Gelenklagerstelle
- 6: Querstange
- 7: Hebel, zweiarmig
- 8: Kolbenstange
- 9: Gestängesteller
- 10: Bremszylinder
- 11: Bremsmomentaufnehmer
- 12: erste verbindung
- 13: Bremssteuerung
- 14: Verbindungs-Bus
- 15: Fahrzeug-Bus
- 16: erster Datenbus
- 17: Führerstand
- 18: Sollwert-Potentiometer
- 19: Elektronik-/Diagnose-Gerät
- 20: zweiter Datenbus
- 21: erster Monitor
- 22: Pulsbreitensteuerung
- 23: Pulsbreitenänderung
- 24: zweite Verbindung
- 25: Kopplung
- 26: Elektromagnet
- 27: Proportionalventil
- 28: Leitung
- 29: Hauptbehälterluftleitung
- 30: Rückschlagventil
- 31: Absperrventil
- 32: Vorratsbehälter
- 33: Wegeventil
- 33a: Elektromagnet
- 34: Notdruckventil
- 35: Leitung
- 36: Leitung
- 37: Leitung
- 38: Belüftungsventil
- 39: Entlüftungsventil
- 40: dritte Verbindung
- 41: Logikelement
- 42: vierte Verbindung
- 43: Leitung
- 44: Leitung
- 45: Druck-Umsetzer
- 46: Zusatzfunktionen
- 47: Gerät
- 48: Diagnose-System
- 49: Verbindungs-Bus
- 50: zweiter Monitor
- 51: Fahrzeug-Verbindung
- 52: Signalleitung
- 53: fünfte Verbindung
- 54: sechste Verbindung
- 55: Gleitschutzgerat
- 56: interner Datenbus
- 57: Roll-Überwachung
- 58: Redundanz-Leitung
- 59: Redundanz-Leitung
- 60: Logik-Element
- 61: Elektromagnet
- 62: Polrad
- 63: Impulsgeber
- 64: Signalleitung
- 64a: Steuerleitung
- 65: Abzweigleitung
- 66: Abzweigleitung
- 67: Lasterfassung
- 67a: Leitung
- 68: Bremsarten-Erfassung
- 68a: Leitung
- 69: Steuerleitung
- 71: Hauptluft-Leitung
- 72: PU-Wandler
- 73: Druckluftleitung
- 74: elektrische Leitung

## Patentansprüche

1. Einrichtung zur Einstellung der Bremskraft an Schienenfahrzeugen, bei der eine jedem Schienenfahrzeug zugeordnete Hauptbehälterluftleitung (29) über ein gesteuertes und/oder geregeltes Ventilsystem an einen Bremszylinder (10) geführt ist, der mit einem Gestängesteller (9) versehen ist und dessen an eine Kolbenstange (8) angeschlossenes Bremsgestänge (5) mittels zwei gegenläufiger Bremsbacken (4a,4b) mit einer auf der Achse (2) der Radpaare (1a,1b) befestigten Bremsscheibe (3) zusammenwirkt, wobei Sollwertsignale über einen Fahrzeug-BUS (15) und/oder eine Pulsbreitensteuerung (22) an eine Bremssteuerung (13) zur Verarbeitung geleitet werden und die Bremssteuerungs-Signale mittels Leitungen (35,36,37) auf das Ventilsystem geschaltet sind, wobei in dem Bremsgestänge (5) ein Bremsmomentaufnehmer (11) für die Messung von Dehnungs-, Zug- oder Biegekräften und zur Umwandlung in ein elektrisches Meßsignal angeordnet ist, die Meßsignale an die Bremssteuerung (13) weitergeleitet werden und mit über den Fahrzeug-BUS (15) und/oder die Pulsbreitensteuerung (22) erhaltenen Sollwert-Signalen eines Sollwert-Potentiometers (18) verglichen werden und das Differenzwert-Sollsignal über das Ventilsystem an den Bremszylinder (10) weitergeleitet wird zur Änderung des Bremsmomentes an dem Bremsbackenpaar (4a,4b), wobei anstelle der Bremssignalübermittlung über den Fahrzeug-BUS (15) und/oder die Pulsbreitensteuerung (22) das über eine Hauptluft-Leitung (71) pneumatisch schaltbare Bremssignal mittels eines an die Hauptluft-Leitung (71) angeschlossenen PU-Wandlers (72) auf die Bremssteuerung (13) übertragbar ist.

2. Einrichtung nach Anspruch 1,
dadurch gekennzeichnet,
daß in jedem einzelnen Schienenfahrzeug bei ein mittels einer Druckluftleitung (73) angeschlossener PU-Wandler (72) bzw. mittels elektrischer Leitungen (74) an die Bremssteuerung (13) angeschlossen ist.

## Claims

1. A device for setting the braking force in rail vehicles, in which a main container air line (29), associated with each rail vehicle, is guided via a controlled or regulated valve system to a brake cylinder (10), which is provided with a linkage regulating unit (9) and the brake-rod linkage (5) of which, which is connected to a piston rod (8), cooperates by means of two oppositely directed brake shoes (4a, 4b) with a brake disc (3) which is secured on the axis (2) of the pair of wheels (1a, 1b), in which nominal value sigals are directed via a vehicle-BUS (15) and/or a pulse width control (22) to a brake control (13) for processing and the brake control signals are connected by means of lines (35, 36, 37) to the valve system, in which a braking moment receiver (11) is arranged in the brake-rod linkage (5) for the measurement of expansion, traction or bending forces and for conversion into an electrical measurement signal, the measurement signals are passed on to the brake control (13) and are compared with nominal value signals of a nominal value potentiometer (18) which are obtained via the vehicle-BUS (15) and/or the pulse width control (22), and the differential value nominal signal is passed on via the valve system to the brake cylinder (10) to alter the braking moment on the pair of brake shoes (4a, 4b), in which instead of the brake signal transmission via the vehicle-BUS (15) and/or the pulse width control (22) the brake signal, which is able to be switched pneumatically via a main air line (71) is able to be transferred to the brake control (13) by means of a PU converter (72) connected to the main air line (71).

2. A device according to Claim 1,
characterised in that in each individual rail vehicle a PU converter (72), connected by means of a pressed air line (73) or by means of electrical lines (74) is connected to the brake control (13).

## Revendications

1. Dispositif pour régler la force de freinage sur des véhicules sur rails, dans lequel un conduit d'air (29) d'un réservoir principal associé à chaque véhicule sur rails est guidé, par l'intermédiaire d'un système de soupapes commandé et/ou réglé, vers un cylindre de frein (10), qui est muni d'un régleur de timonerie (9) et dont la timonerie de frein (5) raccordée à une tige de piston (8) coopère, au moyen de deux mâchoires de frein opposées (4a,4b), avec un disque de frein (3) fixé sur l'essieu (2) de la paire de roues (1a,1b), des signaux de valeurs de consigne étant amenés, pour leur traitement, à une commande de freinage (13) par l'intermédiaire d'un bus de véhicule (15) et/ou d'une commande de durée d'impulsions (22) et les signaux de commande de freinage étant envoyés, au moyen de lignes (35,36,37), au système de soupapes, un récepteur de moment de freinage (11) pour la mesure des forces de dilatation, de traction ou de flexion et pour leur transformation en un signal de mesure électrique étant agencé dans la timonerie de frein (5), les signaux de mesure étant encore guidés vers la commande de freinage (13) et étant comparés avec des signaux de valeurs de consigne, obtenus par l'intermédiaire du bus de véhicule (15) et/ou de la commande de durée d'impulsions (22), d'un potentiomètre de valeurs de consigne (18) et le signal de consigne de valeur différentielle étant encore amené, par l'intermédiaire du système de soupapes, au cylindre de frein (10) pour modifier le moment de freinage sur la paire de mâchoires de frein (4a,4b), le signal de freinage pouvant être mis en circuit pneumatiquement par l'intermédiaire d'un conduit d'air principal (71) pouvant être transmis à la commande de freinage (13) au moyen d'un convertisseur pression-tension (72) raccordé au conduit d'air principal (71), à la place du transfert des signaux de freinage par l'intermédiaire du bus de véhicule (15) et/ou de la commande de durée d'impulsions (22).

2. Dispositif selon la revendication 1,
caractérisé en ce que, dans chaque véhicule individuel sur rails, un convertisseur pression-tension (72) raccordé au moyen d'un conduit d'air comprimé (73) est raccordé à la commande de freinage (13) au moyen de lignes électriques (74).
